# EUROPEAN PATENT APPLICATION

(11) **EP 2 105 465 A1**
(43) Date of publication of application: **30.09.2009**
(21) Application number: 09156461.7
(22) Date of filing: 27.03.2009
(51) Int. Cl.: C08L 27/00, C08L 33/08, C08L 51/00, C08L 27/20, C08F 259/08

(54) **Inert Substrate-Bonded Perfluoroelastomer Components and Related Methods**

(30) Priority: 27.03.2008 US 40055 P
(71) Applicant: Greene, Tweed Of Delaware, Inc., Wilmington, DE 19801 (US)
(72) Inventor: Campbell, Ronald R., Harleysville, PA 19438 (US)
(74) Representative: Fuchs

(57) **Abstract**

Included within the scope of the invention is an article of cured fluoroelastomer composition bonded to an inert substrate. The cured fluoroelastomer composition includes a fluoropolymer, a silica, and an acrylate compound. The fluoroelastomer composition is bonded to the inert substrate with a bind having a bond durability of at least about 1500 pounds load at 20 °C. The inert substrate may be a metal substrate or a ketone-based polymer substrate.

Also included are methods of bonding a fluoroelastomer composition to an inert substrate that may be, for example, a metal substrate or a ketone-based polymer substrate. The methods include contacting a curable fluoroelastomer composition to an inert substrate and curing the fluoroelastomer composition to form a bond between the composition and the inert substrate. The curable fluoroelastomer composition of the methods includes an acrylate compound, a curing agent, silica, and a fluoropolymer that comprises at least one cure site monomer.

## Description

### BACKGROUND OF THE INVENTION

Subterranean well tools (downhole tools) used in oil and gas well operations must be able to withstand the harsh environmental conditions incidental to drilling operations, including exposure to high temperatures and damaging chemicals. The onshore and offshore wells in which these tools are used have become increasingly deeper and deeper, and consequently, the operating pressures and temperatures to which these tools are subject has also increased.

The environment of a drilled well is chemically and mechanically aggressive. The muds and other fluids often used to facilitate drilling contain chemical additives that can degrade non-metallic components of downhole tools, including logging tools and drills. Such chemicals are highly caustic, with a pH level as high as 12.5. Other aggressive well fluids can include salt water, crude oil, carbon dioxide and/or hydrogen sulfide, which are damaging to many materials. As the depth of a given well increases, the environmental stresses (pressure, temperature, chemical attack) become greater. For example, at a depth of 5,000 to 8,000 meters bottom hole temperatures of 350° F to 400° F (177° C to 204° C) and pressures of about 15,000 psi (about 103 MPa) are common.

The downhole tools used in drilling operations are generally complex devices composed of numerous component parts. It is desirable to make the components from the most durable and/or inert materials possible. Often for reasons related to chemical or mechanical strength and durability or other commercial or industrial considerations, components may be made of one or more materials bonded or otherwise affixed to one another, such as fluoroelastomers, perfluoroelastomer, metal, metal alloy, an/or ketone-based resins. However, while the inertness of a fluoroelastomer (including perfluoroelastomers) is a benefit in a downhole environment, it presents difficulty in the fabrication of the component parts of the downhole tool. Because of its inertness, it is difficult to achieve, for example, a metal-to-polymer bond, of sufficient strength and durability to survive the mechanical and chemical stresses of a downhole environment for a reasonable amount of work time before requiring replacement.

Similarly aggressive environments and the corresponding difficulties in usage of materials exist in other areas of industry, including, for example, semiconductor processing, sewage treatment, and medical devices.

Accordingly, there exists an unmet need in the art for articles and component parts of fluoroelastomer joined to a metal or other inert substrate that exhibits durable bond strength, and related methods of preparing such components.

### BRIEF SUMMARY OF THE INVENTION

Included within the scope of the invention is an article of cured fluoroelastomer composition bonded to an inert substrate. The cured fluoroelastomer composition includes a fluoropolymer, a silica, and an acrylate compound. The fluoroelastomer composition is bonded to the inert substrate with a bond having a bond durability of at least about 1500 pounds load at 20 °C. The inert substrate may be a metal substrate or a ketone-based polymer substrate.

Also included are methods ofbonding a fluoroelastomer composition to an inert substrate that may be, for example, a metal substrate or a ketone-based polymer substrate. The methods include contacting a curable fluoroelastomer composition to an inert substrate and curing the fluoroelastomer composition to form a bond between the composition and the inert substrate. The curable fluoroelastomer composition of the methods includes an acrylate compound, a curing agent, silica, and a fluoropolymer that comprises at least one cure site monomer.

Compositions for bonding to an inert substrate are disclosed. They include a fluoropolymer comprising at least one cure site monomer, a curing agent, silica, and an acrylate compound. Upon cure, the bond durability of the composition to the inert substrate is at least about 1500 pounds load at 20 °C.

Also included are methods of forming an article of an inert substrate bonded to a fluoroelastomer composition including the steps of forming a preform comprising a curable fluoroelastomer composition, contacting the preform to an inert substrate, and curing the preform to form a bond between the fluoroelastomer composition and the inert substrate that has a bond durability of at least about 1500 pounds load at 20 °C. The fluoroelastomer composition of the method includes a fluoropolymer having at least one cure site monomer, an acrylate compound, silica, and a curing agent.

Downhole tools containing an inert substrate bonded to a cured fluoroelastomer composition as described above are also disclosed.

### DETAILED DESCRIPTION OF THE INVENTION

Described herein are articles containing fluoroelastomer compositions bonded to one or more inert substrates, such as downhole tools and downhole tool components; curable fluoroelastomer compositions for bonding to inert substrates; and methods for preparing such materials.

As used herein, a "fluoroelastomer composition" refers to a polymeric composition including a curable fluoropolymer. A fluoropolymer may be formed by polymerizing two or more monomers, preferably one of which is fluorinated or perfluorinated, and at least one of which is a cure site monomer to permit curing, *i*.*e*. at least one fluoropolymeric curesite monomer. A fluoroelastomer composition as described herein may include any suitable curable fluoroelastomeric fluoropolymer(s) (FKM) capable of being cured to form a fluoroelastomer, and one or more curatives as described herein.

A perfluoroelastomer, as used herein, may be any substantially cured elastomeric material derived by curing a perfluoropolymer (as defined herein) having at least one crosslinking group to permit cure provided by at least one cure site monomer. A perfluoropolymer, as used herein, is substantially fluorinated, and preferably completely fluorinated, with respect to the carbon atoms on the backbone of the perfluoropolymer. It will be understood that some residual hydrogen may be present in the perfluoroelastomer within the cross links due to use of hydrogen in the functional cross linking group in some types ofperfluoroelastomer formulations. Perfluoroelastomer compositions, as used herein, may be cured or uncured (curable). When modified by the term "uncured" or "curable", perfluoroelastomer compositions refer to the composition containing the perfluoropolymer, but in which such cross-links have yet to substantially occur such that the material is not yet suitable for the intended application.

The fluoroelastomer composition described herein may contain several different ingredients in various permutations as described in detail below, such as one or more fluoroelastomers, perfluoropolymers with one or more of various cure sites, curing agent(s), silica, acrylate compounds, and numerous other optional fillers and additives.

One or more curable fluoropolymers is present in the fluoroelastomer compositions. Such polymers are themselves formed by polymerizing or co-polymerizing one or more perfluorinated monomers, one of which is preferably a fluorinated or perfluorinated cure site monomer having a functional group that permits curing under any one of a number of cure systems. As used herein, a perfluoropolymer (which includes co-polymers) is a polymeric composition that includes a curable perfluoropolymer formed by polymerizing two or more perfluorinated monomers, including at least one perfluorinated monomer that has at least one functional group to permit curing, *i*.*e*., at least one cure site monomer.

Curable perfluoropolymers can include two or more of various perfluorinated co-polymers of at least one of which is fluorine-containing ethylenically unsaturated monomer, such as tetrafluoroethylene (TFE), a perfluorinated olefin, such as hexafluoropropylene (HFP), and a perfluoroalkylvinyl ether (PAVE) that include alkyl groups that are straight or branched and which include one or more ether linkages, such as perfluoro (methyl vinyl ether), perfluoro (ethyl vinyl ether), perfluoro (propyl vinyl ether) and similar compounds. Suitable examples of PAVEs include those described in, for example, United States Patent Nos. 5,001,278 and WO 00/08076, of which the disclosure related to types of PAVEs are herein incorporated by reference. Additional suitable PAVEs are described in, for example, United States Patent Nos. 5,696,189 and 4,983,697, of which the disclosure that is related to types of PAVEs are also herein incorporated by reference. Suitable perfluoropolymers may be those that meet the industry accepted definition of a perfluoroelastomer listed as an FFKM in ASTM V-1418-05 and, are may be terpolymers or tetrapolymers of TFE, PAVE, and have one perfluorinated cure site monomer that incorporates a functional group to permit cross linking of the terpolymer, at least one of which is a cure site capable of being cured by the cure systems used in the practice of the invention.

Perfluoropolymers that may be used in the various embodiments of the invention include those that may be obtained from, for example, Daikin Industries, Inc.; Solvay Solexis; Dyneon; E.I. du Pont de Nemours, Inc.; Federal State Unitary Enterprise S.V.; Lebedev Institute of Synthetic Rubber in Russia, and Nippon Mektron in Japan.

In their uncured or curable state, the fluoroelastomer compositions of the invention include at least one curing agent that corresponds to (*e*.*g*., is capable of facilitating the cross linkage of ) one of the at least one cure site monomers that is present on the fluoropolymer. Any curing agent or combination of curing agents may be used. As examples, on may wish to employ a peroxide curable system or a cyano curable system, depending on the end product and physical characteristics desired of the fluoroelastomer compositions. Regardless of the cure system or combination of systems employed, the fluoropolymer may contain at least one cure site monomer, although the presence of about 2 to about 20 cure site monomers (the same or different) may be desired.

When using a peroxide-curable system, suitable curable fluoropolymers may include terpolymers of TFE, PAVEs such as those described in U.S. Patent No. 5,001,279 (incorporated herein in relevant part by reference), and cure site monomers having a fluorinated structure with a peroxide-curable functional group, such as, for example, halogenated alkyl and other derivatives, and partially- or fully-halogenated hydrocarbon groups.

If a cyano-curable system is used, suitable fluoropolymers include these as described in WO 00/08076, incorporated herein by reference, or other similar structure. Examples include tetrafluoroethylene, perfluoromethylvinyl ether, CF₂=CFO(CF₂)₃OCF(CF₃)CN, and/or CF₂=CFOCF₂CF(CF₃)O(CF₂)₂CN. Other suitable compounds may be those having a Mooney viscosity (measured at 100 °C on a TechPro® viscTECH TPD-1585 viscometer) of about 45 to about 95, and preferably of about 45 to about 65. Such materials may also be used in combination with other curing agents, such as cure accelerators.

Any curing agents or combination of curing agents may be used. Curing agents for peroxide-based cure systems may be any peroxide curing agents and/or co-curing agents known to be developed in the art, such as organic and dialkyl peroxides. For the cyano-based systems, suitable primary curing agents include monoamidines and monoamidoximes as described as U.S. Patent Publication No. US-2004-0214956-A1, the disclosure of which is incorporated herein by reference in relevant part.

The amidine-based and amidoxime-based materials include monoamidines and monoamidoximes of the following formula (I) described further below. Preferred monoamidines and monoamidoximes may be represented by formula (I):

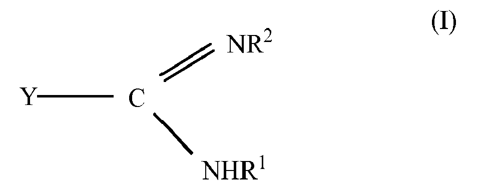

wherein Y may be a substituted alkyl, alkoxy, aryl, aralkyl or aralkoxy group or an unsubstituted or substituted fully or partially halogenated alkyl, alkoxy, aryl, aralkyl or alalkoxy group having about 1 to about 22 carbon atoms. Y may also be a perfluoroalkyl, perfluoroalkoxy, perfluoroaryl, perfluoroaralkyl or perfluoroaralkoxy group of about 1 to about 22 carbon atoms or a perfluoroalkyl or perfluoroalkoxy group of about 1 to 12 carbon atoms, or about 1 to about 9 carbon atoms; and R¹ may be hydrogen or substituted or unsubstituted lower alkyl or alkoxy groups of about 1 to about 6 carbon atoms, oxygen (such that NHR¹ is a NOH group) or an amino group. R² may be independent from any of the groups listed above for R¹ or a hydroxyl. Substituted groups for Y, R¹ or R² include, without limitation, halogenated alkyl, perhalogenated alkyl, halogenated alkoxy, perhalogenated alkoxy, thio, amine, imine, amide, imide, halogen, carboxyl, sulfonyl, hydroxyl, and the like. If R¹ and R² are both selected as oxygen and hydroxyl, such that there are two NOH groups on the compound (a dioxime can be used), and in that case, formula (I) can be found modified to accommodate a dioxime formula in which the carbon atom and the Y group together form an intervening aromatic ring and in which the NOH groups are located ortho-, para- or meta- to one another on the ring, such as with p-benzoquinonedioxime.

In formula (I), R² may be hydroxyl, hydrogen or substituted or unsubstituted alkyl or alkoxy groups of about 1 to about 6 carbon atoms, more preferably hydroxyl or hydrogen. R¹ may be hydrogen, oxygen, amino or substituted or unsubstituted lower alkyl of about 1 to about 6 carbon atoms while R² is hydrogen or hydroxyl. R¹ and R² may both be hydrogen. Y may be a perfluoroalkyl, perfluoroalkoxy, substituted or unsubstituted aryl groups and substituted or unsubstituted halogenated aryl groups having the chain lengths as noted above, particularly preferred are when R¹ and R² are both hydrogen and Y is CF₃(CF₂)₂ - *i*.*e*. when the compound is heptafluorobutyrlamidine or a similar amidoxime compound.

Exemplary monoamidine-based and monoamidoxime-based curing agents include perfluoroalkylamidines, arylmidines, perfluoroalkylamidoximes, arylamidoximes and perfluoroalkylmidrazones. Other examples include perfluorooctanamidine, heptafluorobutyrylamidine, trifluoromethylbenzamidoxime, and trifluoromethoxybenzamidoxixime, with heptaflourobutyrlamidine being most preferred.

Other curing agents can include bisphenyl based curing agents and their derivatives, such as bisaminophenol, tetraphenyltin, triazine, peroxide-based curing systems (*e*.*g*. organic peroxide such as dialkyl peroxides), or combinations thereof. Other suitable curing agents include oganometallic compounds and the hydroxides, especially organotin compounds, including ally-, propargl-, triphenyl- and allenyl tin, curing agents containing amino groups such as diamines and diamine carbamates, such as N,N'-dicinnamylidene-1,6-hexanediamine, trimethylenediamine, cinnamylidene, trimethylenediamine, cinnamylidene ethylenediamine, and cinnamylidene hexamethylenediamine, hexamethylenediamine carbamate, bis(4-aminocyclohexly)methane carbamate, 1,3-diaminopropane monocarbamate, ethylenediamine carbamate, trimethylenediamine carbamate, bisaminothiophenols, bisamidoximes, and bisamidrazones. Most preferably a peroxide cure system (including any necessary co-agents) is used.

Any curing agent(s) may be used alone, in combination, or with secondary curing agents. Thus, the curing system does not require, but may also optionally include, a variety of secondary curatives, such as bisphenyl-based curatives and their derivatives, tetrapheyltin, traizine, peroxide-based curing systems (*e*.*g*., organic peroxides such as dialkyl peroxides) if not used as a primary agent or if used in a combination or peroxides, or combinations of these systems. Other suitable secondary curing agents include oganometallic compounds and the hydroxides thereof, especially organotin compounds, including ally-, propargyl-, triphenyl- and allenyl tin, curing agents containing amino groups such as diamines and diamines carbamates, such as N,N'dicinnamylidene-1,6-hexanediamine, trimethylenediamine, cinnamylidene, trimethylenediamine, cinnamylidene ethylenediamine, and cinnamylidene hexamethylenediamine, hexamethylenediamine carbamate, bis(4-aminocyclohexly)methane carbamate, 1,3-diaminopropane monocarbamate, ethylenediamine carbamate, trimethylenediamine carbamate, and bisaminothiophenols.

The fluoroelastomer composition may include a silica (silicon dioxide) such as, for example, a fumed silica. Silicas may be obtained commercially from, for example, Evonik Degussa Corporation, Piscataway, New Jersey, United States of America (tradename, for example, AEROSIL® 972).

The fluoroelastomer composition may contain an acrylate compound, *e*.*g*., any compound known or developed in the art that includes one or more functional acrylate groups. The acrylate compound may be a metal acrylate or combination of differing acrylate compounds and/or metal acrylates. Examples may include diacrylate, methacrylates, dimethacrylate, triacrylate, and/or tetracrylate compounds. More specifically, suitable examples may include diacrylates and methacrylates of zinc or copper. Such compounds are known to be commercially available from, for example, Sartomer, of Exton, Pennsylvania, United States of America (tradenames, for example, SARET® SR633 and SARET® SR634. Also included are perfluoroelastomers, fluoroelastomers, elastomers or other resins that contain acrylate groups incorporated into their structure.

The fluoroelastomer composition may also contain one or more additional additives, such as, for example, fillers, plasticizers, polymer blends, and colorings. If desired, other additives may include, for example, carbon black, glass fibers, glass spheres, silicates, fiberglass, calcium sulfate, asbestos, boron fibers, ceramic fibers, aluminum hydroxide, barium sulfate, calcium carbonate, fluorographite, magnesium carbonate, alumina, aluminum nitride, borax, perlite, zinc terephthalate, silicon carbide platelets, wollastonite, calcium terephthalate, fullerene tubes, Hectorite, talc, mica, carbon nanotubes, and silicon carbide whiskers.

The above-discussed fluorolastomeric composition may contain any or all of the various ingredients discussed above in any proportion, ratio, or permutation. Individuals of skill in the art will recognized such ingredients and relative ratios may be altered and varied depending on the desired characteristics of the end product, which in turn is informed by the application into which the bonded component is to used. However, in certain contexts, it may be desirable to include in the composition (per every 100 parts of the fluoropolymer ("phr")) an acrylate compound in an amount of about 1 to about 20, about 3 to about 15, or about 5 to about 10 phr and/or silica in an amount of about 1 to about 20, about 3 to about 15, or about 5 to about 10 phr. A curing agent may be present in the amount necessary to provide adequate cure, for example, in an amount of about up to at least about 5 or about 2 to about 4 phr

The articles, components, tools, and methods of the invention involve use of an inert substrate to which the perfluoroelastomer composition is bonded or contacted. Inert substrates as used herein include any those made of one or more material(s) that is substantially resistant to aggressive mechanical, chemical, or barometric forces, or any combination of forces, such as those that may be experiences in a downhole environment or in semiconductor wafer processing. Inert substrates may include, for example, metal substrate or ketone-based polymer substrates. The substrate may be any containing such material wholly or in part; for example, materials with veneers, coatings (discontinuous or continuous) or composites are included.

The inert substrate may include any metal, such as, for example, beryllium, copper, silver, aluminum, chromium, titanium, nickel, steel and/or metal alloys or other metal mixtures, such as, for example, titanium alloys and copper alloys, beryllium copper alloys, nickel silver alloys, nickel titanium alloys, chromium alloys, and steel. In some contexts, the metal substrate may contain any metal but brass or other alloys of copper or zinc. Titanium alloys and nickel alloys, such as the austenitic nickel-based superalloys sold under the tradename INCONEL® by Special Metal Corporation, New Hartford, New York, United States of America may be suitable. Alternatively, the inert substrate may contain ketone-based polymer(s), such as, for example, polyetheretherketone, (PEEK), polyetherketoneketone (PEKK), polyaryl etherketone (PAEK), polyetherketone etherketone ketone (PEKEKK), PEEK blended with thermoplastic polyimide (PEEK+TP-PI), and polyetherketone (PEK).

Upon cure, the fluoroelastomer composition forms a bond with the inert substrate. The bond has a bond durability at 20° C of at least about 1500 pounds load (*e*.*g*., load at failure), about 2000 to about 4000 pounds load, about 2500 to about 3500 pounds load, or about 2750 to about 3000 pounds load. Additionally, at 260° C, the bond has a bond durability of about 500 to about 2000 pounds load, about 700 to about 1500 pounds load, or about 950 to about 1100 pounds load. This bond durability is measured using the standard test method for rubber property adhesion to rigid substrates, ASTM D 429-03 (2006), Method A, the contents of which are incorporated herein by reference. The method includes molding a 3.2 +/- 1 mm cylinder of test rubber between two 1250 +/- 5 mm² metal or rigid substrate plates. The plates are pulled at a uniform rate of 40 +/-.04 mm/s. The load (in pounds) at which the bond fails is the "pounds load" unit indicating the strength of the bond.

The invention includes methods of bonding the fluoroelastomer composition to the inert substrate by contacting a curable perfluoropolymer composition (as described above) to the substrate and curing it via any curing means known or developed in the art. Another method includes first preparing a preform of fluoroelastomer composition. The preform may be formed by any means, including cutting, clicking, extruding or molding. The preform may be partially cured (*e*.*g*., some crosslinking may have occurred, but not to the desired extent). The preform is contacted to an inert substrate and cured *in situ*.

The bond is formed between the fluoroelastomer composition and the inert substrate that has the bond durability discussed above. The bond if formed as the polymer vulcanizes, which occurs, for example, during a press cure.

Also included within the scope of the invention are methods of bonding a fluoroelastomer composition to a inert substrate. Such method includes contacting the curable fluoroelastomer composition (containing any or all of the components discussed above) and an acrylate compound and a curing agent to an inert substrate. The fluoropolymer should comprise at least one cure site monomer. After contact, the fluoroelastomer composition is cured *in situ* to form a bond between the composition and the inert substrate. The bond has a bond durability that corresponds to the durability previously disclosed, as measured by ASTM D 429-03.

Cure in any method may be accomplished by any means known or to be developed in the art including heat cure, cure by application of high energy, heat cure, press cure, steam cure, a pressure cure, an e-beam cure or cure by any combination of means, etc. Post-cure treatments may also be applied, if desired.

The articles and or the methods described above may be used in or to prepare parts of downhole tools used in the petrochemical industry. Such parts or tools include those disclosed in, for example, United State Patent Nos. 7,339,161; 7,337,858; 7,337,852; 7,334,642; 7,328,755; 7,328,750; 7,322,408 ; 7,322,407; 7,320,366; 7,320,252; 7,316,281; 7,316,277; 7,305,306, the contents of each of which are incorporated herein by reference with respect to the types of tools disclosed.

It will be appreciated by those skilled in the art that changes could be made to the embodiments described above without the parting from the broad inventive concepts. It is therefore understood that this invention is not limited to the particular embodiments that are disclosed, but is intended to cover modifications within the spirit and scope of the present invention as defined in the claims. The invention refers to:

An article comprising a cured fluoroelastomer composition bonded to an inert substrate, wherein the cured fluoroelastomer composition comprises a fluoropolymer, a silica, and an acrylate compound.

The article of item 1, wherein the bond has a bond durability of at least about 1500 pounds load at 20 °C.

The article of item 1, wherein the fluoroelastomer is a perfluoroelastomer.

The article of item 1, wherein the inert substrate is a metal substrate.

The article of item 1, wherein the inert substrate is chosen from beryllium, copper, silver, aluminum, titanium, nickel, steel, chromium, and stainless steel.

The article of item 1, wherein the inert substrate is chosen from a titanium alloy, a copper alloy, a beryllium copper alloy, a nickel silver alloy, a nickel titanium alloy, a chromium alloy, and steel.

The article of item 1 where in the inert substrate is chosen from a ketone-based polymer, polyetheretherketone, polyetherketoneketone, polyaryl etherketone, polyetherketone etherketone ketone, and polyetherketone.

The article of item 1, wherein the fluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

The article of item 1, wherein, prior to cure, the fluoroelastomer composition comprises a curing agent and an uncured perfluoropolymer that comprises a cure site monomer.

The article of item 9, wherein the at least one cure site monomer is chosen from a cyano group cure site monomer, an olefin-containing cure site monomer, and a halogenated olefin-containing cure site monomer.

The article of item 9, wherein the curing agent is chosen from a peroxide curing agent, an organotin curing agent, an amino curing agent, a bisaminophenol curing agent, a bisaminothiophenol curing agent, a bisamidrazone curing agent, a functionalized biphenyl-based curing agent, and derivatives and combinations thereof.

The article of item 1, wherein the acrylate compound is a metal acrylate.

The article of item 1, wherein the acrylate compound is zinc diacrylate.

The article of item 1, wherein the acrylate compound is chosen from a methacrylate compound, a dimethacrylate compound, zinc dimethacrylate, and copper diacrylate.

The article of item 1, wherein the fluoroelastomer composition further comprises an additive chosen from a filler, a plasticizer, a polymer blend, and a colorant.

The article of item 1, wherein the fluoroelastomer composition further comprises an additive chosen from carbon black, glass fibers, glass spheres, silicates, fiberglass, calcium sulfate, asbestos, boron fibers, ceramic fibers, aluminum hydroxide, barium sulfate, calcium carbonate, fluorographite, graphite, magnesium carbonate, alumina, aluminum nitride, borax, perlite, zinc terephthalate, silicon carbide platelets, wollastonite, calcium terephthalate, fullerene tubes, Hectorite, talc, mica, and silicon carbide whiskers.
Furthermore, the invention referst to a method :

A method of bonding a fluoroelastomer composition to a inert substrate, the method comprising:
(a) contacting a curable fluoroelastomer composition to an inert substrate, wherein the curable fluoroelastomer composition comprises an acrylate compound, a curing agent, silica, and a curable fluoropolymer that comprises a cure site monomer; and
(b) curing the fluoroelastomer composition to form a bond between the composition and the inert substrate.

The method of item 17, wherein the bond formed in step (b) has a bond durability of at least about 1500 pound at 20 °C.

The method of item 17, wherein the fluoroelastomer composition is a perfluoroelastomer composition.

The method of item 17, wherein the inert substrate is a metal substrate.

The method of item 17, wherein the inert substrate is a metal substrate chosen from beryllium, copper, silver, aluminum, chromium, titanium, nickel, steel, and stainless steel.

The method of item 17, wherein the inert substrate is a metal alloy chosen from a titanium alloy, a copper alloy, a beryllium copper alloy, a nickel silver alloy, a nickel titanium alloy, a chromium alloy, and steel.

The method of item 17, wherein the perfluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

The method of item 17, wherein the acrylate compound is a metal acrylate.

The method of item 17, wherein the composition is cured by a cure chosen from a heat cure, a light cure, pressure cure, steam cure, and e-beam cure.
Furthermore, the invention referst to a fluoroelastomer composition:

A curable fluoroelastomer composition for bonding to a inert substrate comprising:
(a) a fluoropolymer comprising at least one cure site monomer;
(b) a curing agent;
(c) silica; and
(d) an acrylate compound;
wherein, upon cure, the bond durability of the composition to the inert substrate is at least about 1500 pounds load at 20 °C.

The composition of item 26, wherein the fluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

The composition of item 26, wherein the at least one cure site monomer is chosen from a cyano group cure site monomer, an olefin-containing cure site monomer, and a halogenated olefin-containing cure site monomer.

The composition of items 26, wherein the curing agent is chosen from a peroxide curing agent, an organotin curing agent, an amino curing agent, a bisaminophenol curing agent, a bisaminothiophenol curing agent, a bisamidrazone curing agent, and a functionalized biphenyl-based curing agent.

The composition of item 26, wherein the acrylate compound is a metal acrylate.

The composition of item 26, wherein the acrylate compound is zinc diacrylate.

The composition of item 26, wherein the acrylate compound is chosen from a methacrylate compound, a dimethacrylate compound, zinc dimethacrylate, and copper diacrylate.

The composition of item 26 further comprising an additive chosen from a filler, a plasticizer, a polymer blend, and a colorant.

The composition of item 26 further comprising an additive chosen from carbon black, glass fibers, glass spheres, silicates, fiberglass, calcium sulfate, asbestos, boron fibers, ceraminc fibers, aluminum hydroxide, barium sulfate, calcium carbonate, fluorographite, graphite, magnesium carbonate, alumina, aluminum nitride, borax, perlite, zinc terephthalate, silicon carbide platelets, wollastonite, calcium terephthalate, fullerene tubes, Hectorite, talc, mica, and silicon carbide whiskers.
Furthermore, the invention refers to a method of forming an article:

A method of forming an article comprising a inert substrate bonded to a fluoroelastomer composition comprising:
(a) forming a preform comprising a curable fluoroelastomer composition, wherein the fluoroelastomer composition comprises a curable fluoropolymer having at least one cure site monomer, an acrylate compound, silica, and a curing agent;
(b) contacting the preform to an inert substrate; and
(c) curing the preform to form a bond between the fluoroelastomer composition and the inert substrate that has a bond durability of at least about 1500 pounds load at 20 °C.

The method of item 35, wherein the inert substrate is chosen from a metal substrate and a ketone-based polymer substrate.

The method of item 35, wherein the composition is cured by a cure chosen from a heat cure, a light cure, a pressure cure, a steam cure, and e-beam cure.
Furthermore, the invention refers to a tool:

A downhole tool comprising an inert substrate bonded to a cured fluoroelastomer composition, wherein the fluoroelastomer composition comprises a fluoropolymer, silica, and an acrylate compound.

The tool of item 38, wherein the bond has a bond durability of at least about 1500 pounds load at 20 °C.

The tool of item 38, wherein the substrate is chosen from a metal substrate and a ketone-based polymer substrate.

The tool of item 38, wherein the inert substrate is chosen from beryllium, copper, silver, aluminum, titanium, chromium, nickel, steel, and stainless steel, a titanium alloy, a copper alloy, a beryllium copper alloy, a nickel silver alloy, a nickel titanium alloy, a chromium alloy, and steel.

The tool of item 38, wherein the fluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

The tool of item 38, wherein, prior to cure, the fluoroelastomer composition comprises a curing agent and a fluoropolymer that comprises a cure site monomer.

The tool of item 38, wherein the at least one cure site monomer is chosen from a cyano group cure site monomer, an olefin-containing cure site monomer, and a halogenated olefin-containing cure site monomer.

The tool of item 38, wherein the curing agent is chosen from a peroxide curing agent, an organotin curing agent, an amino curing agent, a bisaminophenol curing agent, a bisaminothiophenol curing agent, a bisamidrazone curing agent, and a functionalized biphenyl-based curing agent.

The tool of item 38, wherein the acrylate compound is a metal acrylate.

### EXAMPLE 1

### Preparation of a Fluoroelastomer Composition

A curable fluoroelastomer composition is compounded using a Banbury mixer to combine the following ingredients (Table 1):

**Table 1:**

| Ingredient | Composition 1 (phr) | | | | |
|---|---|---|---|---|---|
| Peroxide curable fluoroelastomer polymer | 100 | | | | |
| Carbon black | 60 | 2 | 22 | 22 | 22 |
| Process aid | 0.5 | 1 | 1 | 1 | 1 |
| Zinc oxide | 5 | 10 | 10 | 0 | 5 |
| SARET SR633 | 10 | 10 | 0 | 10 | 5 |
| Peroxide | 3 | 3 | 3 | 3 | 3 |
| Cocure | 4 | | | | |

SARET SR633 is a commercially available anhydrous zinc diacrylate available from Sartomer, Exton, Pennsylvania, United States of America.

### EXAMPLE 2

### Preparation of a Perfluoroelastomer Composition

A curable perfluoroelastomer composition is compounded using a Banbury mixer to combine the following ingredients (Table 2):

**Table 2:**

| Ingredient | Composition 1 (phr) | Composition 2 (phr) | Composition 3 (phr) | Composition 4 (phr) | Composition 5 (phr) |
|---|---|---|---|---|---|
| Peroxide curable perfluoroelastomer polymer | 100 | 100 | 100 | 100 | 100 |
| Carbon black | 22 | 22 | 22 | 22 | 22 |
| Strucktol WS 280 | 1 | 1 | 1 | 1 | 1 |
| AEROSIL R972 | 0 | 10 | 10 | 0 | 5 |
| SARET SR633 | 0 | 10 | 0 | 10 | 5 |
| Varox (DBPH 50%) | 3 | 3 | 3 | 3 | 3 |

STRUCKTOL WS 280 is a proprietary organosilicone compound available from Strucktol America, Stow, Ohio, United States of America. AEROSIL R972 is a trade name for a fumed silica available from Evonik Degussa Corporation, Piscataway, New Jersey, United States of America (tradename, for example, AEROSIL® 972). SARET SR633 is a commercially available anhydrous zinc diacrylate available from Sartomer, Exton, Pennsylvania, United States of America. Varox (dbph 50%) is a tradename for a proprietary formulation of 2,5-dimethyl- 2,5 di-(t-butyl peroxy) hexane with a calcium carbonate and silica binders.

The resultant materials are bonded to various substrates and the bond durability other mechanical and chemical characteristics are evaluated as described in Examples 3 and 4.

### EXAMPLE 3

### Evaluation of Bond Durability

Compositions 1-4 were bonded to substrates of aluminum, stainless steel, INCONEL 825 (a nickel-iron-chromium alloy with additions of molybdenum, copper and titanium), and titanium. The results of bond durability, as assessed by load at failure at 20 °C degrees using ASTM D429-03, Method A, as described above, are shown below in Table 2. Numbers for each composition represent the average of three tests run on three samples.

**Table 3:**

| Bonding to Substrate (pounds load at failure) at 20°C | Composition 1 | Composition 2 | Composition 3 | Composition 4 | Composition 5 |
|---|---|---|---|---|---|
| Aluminum | 908 | 2475 | 680 | 2580 | 1764 |
| Stainless Steel | 372 | 1977 | 275 | 2452 | 1450 |
| INCONEL 825 | 578 | 2817 | 465 | 2849 | 1863 |
| Titanium | 758 | 2615 | 739 | 2705 | 2817 |

### EXAMPLE 4

### Evaluation of Physical and Chemical Properties

The standard physical and chemical properties of each of composition 1-5 of Example 2 were evaluated and the results are shown in Table 3:

**Table 4:**

| | Composition 1 | Composition 2 | Composition 3 | Composition 4 | Composition 5 |
|---|---|---|---|---|---|
| Tensile psi (original) | 2272 | 3676 | 3133 | 3043 | 3016 |
| Tensile psi (post immersion) | 142 | 97 | 149 | 119 | 82 |
| 100% Modulus | 1251 | N/A | 1473 | 2235 | N/A |
| 50% Modulus | 400 | 1992 | 572 | 986 | 1103 |
| Durometer M | 85 | 95 | 89 | 92 | 91 |
| Specific Gravity | 2.003 | 1.973 | 2.010 | 1.991 | 2.002 |
| Tensile psi (post immersion in DI water at 250°C at 168 hours) | 1659 | 1219 | 985 | 1024 | 1076 |
| % Change Tensile | -26.98 | -66.83 | -68.56 | -66.34 | -64.32 |
| 100% Elongation | 183 | 148 | 140 | 121 | 128 |
| % Change Elongation | +28.87 | +52.57 | -6.04 | +1.68 | 56.09 |
| Durometer Change M | 2 | -11 | -10 | -7 | -10 |
| % Volume Swell | +2.10 | +25.84 | +16.85 | +25.49 | +20.51 |

To obtain the above data, O-rings were tested using the test protocols set our in ASTM D471 standard test method for rubber property effect of liquids, the contest of which are incorporated herein by reference.

## Claims

1. An article comprising a cured fluoroelastomer composition bonded to an inert substrate,
wherein the cured fluoroelastomer composition comprises a fluoropolymer, a silica, and an acrylate compound.

2. The article of claim 1, wherein the bond has a bond durability of at least about 1500 pounds load at 20 °C.

3. The article of claim 1, wherein the fluoroelastomer is a perfluoroelastomer.

4. The article of claim 1, wherein the inert substrate is a metal substrate.

5. The article of claim 1, wherein the fluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

6. The article of claim 1, wherein the acrylate compound is a metal acrylate.

7. The article of claim 1, wherein the acrylate compound is zinc diacrylate.

8. The article of claim 1, wherein the fluoroelastomer composition further comprises an additive chosen from a filler, a plasticizer, a polymer blend, and a colorant.

9. A method of bonding a fluoroelastomer composition to a inert substrate, the method comprising:
(a) contacting a curable fluoroelastomer composition to an inert substrate, wherein the curable fluoroelastomer composition comprises an acrylate compound, a curing agent, silica, and a curable fluoropolymer that comprises a cure site monomer; and
(b) curing the fluoroelastomer composition to form a bond between the composition and the inert substrate.

10. The method of claim 9, wherein the bond formed in step (b) has a bond durability of at least about 1500 pound at 20 °C.

11. The method of claim 9, wherein the fluoroelastomer composition is a perfluoroelastomer composition.

12. The method of claim 9, wherein the perfluoropolymer comprises a monomer chosen from a fluorine-containing ethylenically unsaturated monomer, tetrafluoroethylene, a perfluorinated olefin, hexafluoropropylene, and perfluoro(ethyl vinyl ether).

13. The method of claim 9, wherein the acrylate compound is a metal acrylate.

14. A curable fluoroelastomer composition for bonding to a inert substrate comprising:
(a) a fluoropolymer comprising at least one cure site monomer;
(b) a curing agent;
(c) silica; and
(d) an acrylate compound;
wherein, upon cure, the bond durability of the composition to the inert substrate is at least about 1500 pounds load at 20 °C.

15. The composition of claim 14, wherein the acrylate compound is a metal acrylate.

16. A method of forming an article comprising a inert substrate bonded to a fluoroelastomer composition comprising:
(a) forming a preform comprising a curable fluoroelastomer composition, wherein the fluoroelastomer composition comprises a curable fluoropolymer having at least one cure site monomer, an acrylate compound, silica, and a curing agent;
(b) contacting the preform to an inert substrate; and
(c) curing the preform to form a bond between the fluoroelastomer composition and the inert substrate that has a bond durability of at least about 1500 pounds load at 20 °C.

17. The method of claim 16, wherein the inert substrate is chosen from a metal substrate and a ketone-based polymer substrate.

18. A downhole tool comprising an inert substrate bonded to a cured fluoroelastomer composition, wherein the fluoroelastomer composition comprises a fluoropolymer, silica, and an acrylate compound.

19. The tool of claim 18, wherein the bond has a bond durability of at least about 1500 pounds load at 20 °C.

20. The tool of claim 18, wherein the substrate is chosen from a metal substrate and a ketone-based polymer substrate.

21. The tool of claim 18, wherein the curing agent is chosen from a peroxide curing agent, an organotin curing agent, an amino curing agent, a bisaminophenol curing agent, a bisaminothiophenol curing agent, a bisamidrazone curing agent, and a functionalized biphenyl-based curing agent.
